**Europäisches Patentamt**

**European Patent Office**

**Office européen des brevets**

(19)

(11) Publication number: **0 122 691**

**B1**

(12) # EUROPEAN PATENT SPECIFICATION

(45) Date of publication of patent specification: **30.09.87**

(51) Int. Cl.⁴: **F 16 K 1/228**

(21) Application number: **84300941.6**

(22) Date of filing: **14.02.84**

(54) **Bidirectional cryogenic valves.**

(30) Priority: **15.04.83 US 485177**

(43) Date of publication of application:
**24.10.84 Bulletin 84/43**

(45) Publication of the grant of the patent:
**30.09.87 Bulletin 87/40**

(84) Designated Contracting States:
**BE CH DE FR GB IT LI NL SE**

(56) References cited:
**EP-A-0 040 725**
**EP-A-0 067 403**
**FR-A-2 038 438**
**US-A-3 077 332**
**US-A-3 650 508**
**US-A-4 277 047**

(73) Proprietor: **Lear Siegler Energy Products Corporation**
**2040 East Dyer Road**
**Santa Ana California 92702 (US)**

(72) Inventor: **Stock, Richard W.**
**818 Acacia**
**Fullerton California 92631 (US)**

(74) Representative: **Blatchford, William Michael et al**
**Withers & Rogers 4 Dyer's Buildings Holborn**
**London EC1N 2JT (GB)**

Courier Press, Leamington Spa, England.

## Description

This invention relates to a bidirectional cryogenic valve and, more particularly, to cryogenic and special fluid handling valves having improved sealing means capable of use at all temperatures from cryogenic to extreme fire temperatures.

The present invention is directed to valve structures of the type disclosed in U.S. Patent No. 3,260,496, and which valve principally uses a unilateral sealing means. A bidirectional cryogenic valve is disclosed in U.S. Patent No. 3,650,508, which discloses a valve comprising a body member provided with a passageway for fluids, a valve disc rotatably mounted in the passageway for controlling the flow of fluids therethrough; bidirectional, sealing means mounted in the passageway of the body member for coaction with the valve disc to seal off the flow of fluid through the body member in both fluid flow directions through the passageway; the sealing means being operable over a range of temperatures extending down to cryogenic temperatures and being constructed and defined for bidirectional sealing engagement with the edge of the valve disc, the sealing portion of the sealing means including a thermally sensitive, resilient material for engaging the valve disc in a leakproof fashion; and mechanically responsive spring means mounted adjacent the sealing means and providing a sealing load to compensate for non-uniform expansion and contraction of adjacent parts of the valve during temperature changes to provide a substantially constant sealing load. These patented structures are particularly adapted for controlling the flow of cryogenic fluids, including liquid and gaseous hydrogen, nitrogen, oxygen, and methane, as well as many other ambient temperature bi-propellants and corrosive fluids. The sealing means used in such cryogenic valves provide virtually leakproof action, and are constructed entirely of resilient plastic materials, such as Teflon or the like. They are, however, subject to being destroyed by fire conditions at the valve thereby rendering the valve inoperative or subject to leaks. It has been found that sealing means constructed entirely of plastic material require frequent replacement when the valve is used in throttling type service. It has also been found that when such prior art valve sealing structures are utilized for handling liquified natural gas, LNG, that the fluid contains sand, dirt, or similar foreign particles that may become crushed between the valve disc and the sealing means, thereby scratching or damaging the sealing surfaces, both the resilient seal and the disc sealing surface, whereby the sealing qualities of the valve are deteriorated. The problem is particularly troublesome where metallic sealing means are used. The handling of liquified natural gas (LNG) has been found to be fire prone and LNG valves now must meet the specification of having a fire safe seat in the form of metallic sealing means. Various types of sealing means for these cryogenic and special fluid handling means are available and are presently sold as providing a fire safe seal, including metallic seals.

Another prior valve is disclosed in French Patent No. 2,038,438. This is a butterfly valve having a closure disc rotatably mounted on the valve body and offset laterally with respect to its axis of rotation. The valve disc periphery has an annular bearing surface and the valve body has an annular seal projecting into the valve body for sealing engagement with the annular bearing surface.

According to this invention there is provided a valve comprising a body member provided with a passageway for fluids, a valve disc rotatably mounted in the passageway for controlling the flow of fluids therethrough; bidirectional sealing means mounted in the passageway of the body member for coaction with the valve disc to seal off the flow of fluid through the body member in both fluid flow directions through the passageway; the sealing means being operable over a range of temperatures extending down to cryogenic temperatures and being constructed and defined for bidirectional sealing engagement with the edge of the valve disc, the sealing portion of the sealing means including a thermally sensitive, resilient material for engaging the valve disc in a leakproof fashion; and mechanically responsive spring means mounted adjacent the sealing means and providing a sealing load to compensate for non-uniform expansion and contraction of adjacent parts of the valve during temperature changes to provide a substantially constant sealing load, characterised in that the sealing means comprises a metallic core with a layer of thermally sensitive material bonded over the bidirectional sealing surfaces of the sealing means for sealing against the valve disc and has a metallic portion for engaging the valve disc to provide a fire safe seal for the valve, the sealing means being operable at temperatures up to extremes of fire temperatures. A preferred embodiment of this valve is constructed so as to be retrofittable to all present day bidirectional butterfly valves of the aforementioned prior art design (U.S. Patent 3 650 508) without any machining being required or modification to the basic valve structure. The preferred valve is structured to prevent sand, dirt, or similar foreign particles from damaging the sealing properties of the metallic portion of the sealing means, including when it is used in LNG applications and where such foreign particles are normally found, and yet provides exceptional tight sealing capabilities.

The bidirectional sealing means advantageously has a metallic substrate that has a thin layer of thermally sensitive, resilient material bonded to the pair of spaced sealing lobes. A third sealing lobe forms the metallic portion of the sealing means and is arranged between the resiliently covered pair of spaced sealing lobes to provide the fire safe seal and to provide exceptionally tight sealing capabilities with a valve disc.

The valve may further include spring means mounted adjacent the sealing means and providing a variable sealing load to compensate for the change in resiliency of the bonded plastic material due to temperature changes thereby maintaining leakproof performance even at cryogenic temperature.

The invention will now be described by way of example with reference to the drawings in which:—

Figure 1 is a front perspective view of a bidirectional valve in accordance with the present invention and illustrating the valve disc in an open condition;

Figure 2 is a cross-sectional view taken along the line 2—2 of Figure 1;

Figure 3 is an enlarged cross-sectional view of the sealing structure illustrated in Figure 1 in the area of the circle marked as Figure 3; and

Figure 4 is an enlarged view of the valve structure of Figure 3 with parts omitted to illustrate the sealing structure in its relaxed condition corresponding to a valve open position.

In reading the description hereinafter, it should be understood that the overall structural organization of the preferred valve in accordance with the present invention is the same as that disclosed in U.S. Patent No. 3,650,508. The present disclosure, then, is directed to the structure of a valve 10, as shown in the drawings, incorporating improved bidirectional sealing means making the valve particularly adapted for handling cryogenic fluids, including liquid and gaseous hydrogen, nitrogen, oxygen, and methane, as well as other ambient temperature bipropellants and corrosive fluids which are compatible with the basic valve materials.

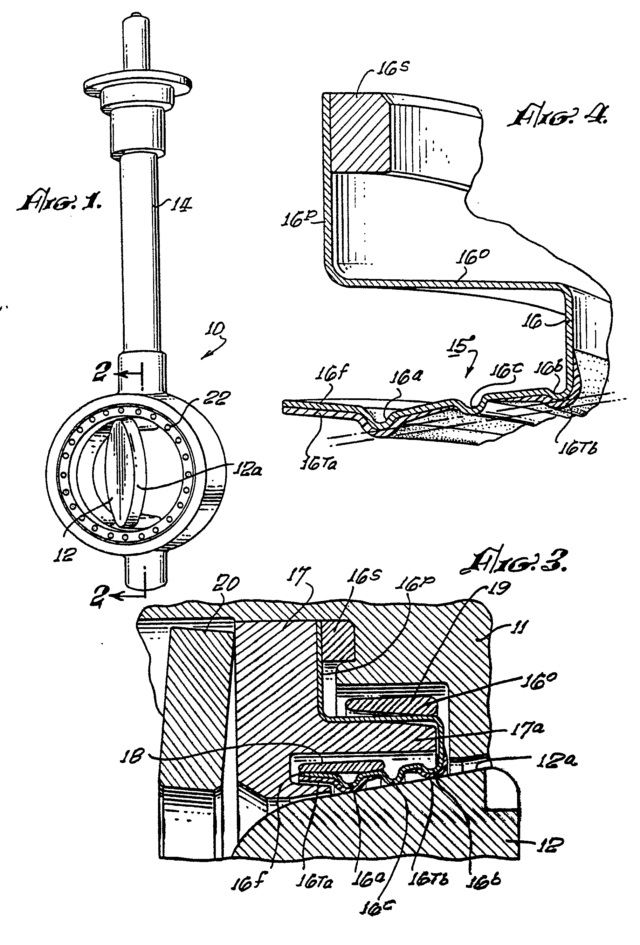

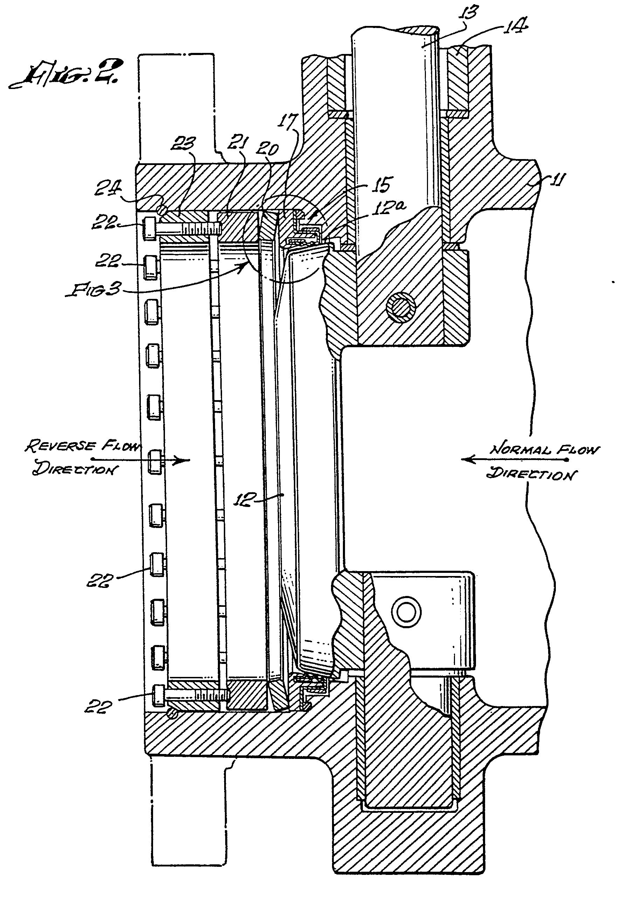

The valve 10 as illustrated in the drawings, comprises a valve body 11 mounting valve disc 12 secured to a valve operator shaft 13. The operator shaft 13 extends through a torque tube 14 in a conventional fashion. The valve disc 12 is arranged with bidirectional sealing generally identified by the reference numeral 15. The valve disc 12 is operated in the usual fashion, and can be rotated from a fully closed position to a fully open position. It is illustrated in an open position in Figure 1 and in a fully closed position in Figures 2 and 3. As in the structures disclosed in U.S. Patent Nos. 3,260,496 and 3,650,508, the valve disc 12 is constructed and defined with a sealing surface 12A that is spherically defined to produce the desired sealing action. The valve disc 12 is preferably constructed as a butterfly type structure and is arranged in a slightly offset relationship to the sealing means 15 as well as being offset from a spherical in a direction perpendicular to the flow, as in the structures of the cryogenic valves constructed in accordance with Patents 3,260,496 and 3,650,508.

The sealing means 15 comprises the sealing element 16 preferably constructed of a formed, annealed copper inner core. It should also be recognized that the sealing element 16 could be constructed of a stainless steel element. The sealing element 16 is provided with three sealing lobes $16^a$, $16^b$ and $16^c$ to provide exceptional tightness. The sealing surface of element 16, best illustrated in Figs. 3 and 4, functions as the seal substrate and has deposited along its sealing surface a film of Teflon on the order of 0.015 to 0.020 inches (corr. 0.038 to 0.051 cm) thick. The Teflon coating is deposited over the sealing lobes or beads $16^a$ and $16^b$ of the sealing element 16. These dynamic sealing beads $16^a$ and $16^b$ are arranged on the fluid exposed leg $16^f$ of the sealing element 16 and are adapted to engage the valve disc 12. These bead-like elements $16^a$ and $16^b$ are provided and arranged to engage the sealing surface $12^a$ for the disc 12 when the latter is rotated to a fully closed position, as illustrated in Fig. 3 to effect the bidirectional seal in accordance with the direction of the fluid flow through the valve body 11. A third beadlike element $16^c$ is constructed and defined intermediate the beadlike elements $16^a$ and $16^b$, however, it is not provided with a thin layer of Teflon bonded thereto. In the actual manufacturing technique for providing the Teflon coating to the leg $16^f$, the coating can be electrodeposited or heat press bonded to the entire leg $16^f$, including the portion that extends vertically above the sealing bead $16^b$, and then all of the material on the bead $16^c$ proper is removed. The portion of Teflon coating enveloping the sealing bead $16^a$ and the adjacent surfaces of the leg $16^f$ are identified as the coating 16Ta, while the Teflon coating the sealing bead $16^b$ and the adjacent surfaces is the coating 16Tb. This coating 16Tb extends around the leg $16^f$ to the bridging leg between legs $16^c$ and $16^f$, as best illustrated in Fig. 4. The Teflon coating can be either a fluorinated ethylene propylene, FEP Teflon, or a perfluoroalkoxy, PFA Teflon, material. In the relaxed condition of the sealing leg $16^f$ as illustrated in Fig. 4, the sealing beads $16^a$ and $16^b$ are constructed and defined to extend approximately 0.002 inches (corr. 0.005 cm) below the metallic seating lobe $16^c$. When the valve disc 12 is closed, then, the sealing beads $16^a$ and $16^b$ will "crush" due to the resiliency of the Teflon coating whereby all three sealing beads $16^a$, $16^b$, and $16^c$ will engage the sealing surface $12^a$ of the disc 12 when it is in a closed position.

As is particularly evident from examining Figs. 3 and 4, it will be seen that the sealing element 16 has a generally U-shaped construction in cross section and comprises the arms $16^f$ and $16^c$ of the U, with an outwardly extending arm $16^k$. In this respect, the sealing element 16 is provided with such a U-shaped configuration; namely, through the provision of the legs $16^c$ and $16^f$ to prevent the sealing elements from blowing out downstream in both fluid flow directions. The sealing leg $16^k$ has a spacer $16^s$ defined at one end to abut the valve body 11 and function as a static seal. This spacer $16^s$ is also provided with a Teflon coating on the order of 0.002 inches (corr. 0.005 cm) thick of the same material as the coatings 16Ta and 16Tb.

A retainer 17 is constructed and defined with a configuration conforming to that of the sealing element 16 for retaining it in the desired position within the valve 10. The retainer 17 is further defined and constructed to limit the radial displacement of the beads 16ᵃ, 16ᵇ, and 16ᶜ by means of the retaining arm 17ᵃ. The retaining arm 17ᵃ extends into the interior of the U of the sealing element 16 or between the legs 16ᶠ and 16ᵒ, as best viewed in Fig. 3. The coaction of these elements is such that the pressure on top of the outer seal leg 16ᵒ plus the mechanical and thermal loading provided by an outer spring 19 affects the seal at the seal bead 16ᵇ. The outer spring 19 may be in the form of a metallic or aluminum hoop that is stretched around the seal leg 16ᵒ and has springlike characteristics to provide the required mechanical and thermal loading at the seal bead 16ᵇ. This configuration of the seal leg 16ᵒ is pressure sensitive under the normal flow direction or the fluid flow direction from right to left, as illustrated in Fig. 2, to effect a seal at seal bead 16ᵇ. When the fluid flow is in the reverse direction, or from left to right, as illustrated in Fig. 2, pressure from the top of the inner seal leg 16ᶠ plus the mechanical and thermal loading by the inner spring 18 effects the seal at the seal bead 16ᵃ. The inner spring 18 may also be a metal or aluminum hoop that is stretched around the inner seal leg 16ᶠ to provide the required mechanical and thermal loading of the seal bead 16ᵃ. Of course, it will be appreciated that any other means for mechanically loading the sealing element 16 may be employed, as long as such means has a higher thermal coefficient than the expansion of the disc 12.

The configuration of the seal leg 16ᶠ is pressure sensitive under the reverse flow direction to effect the seal at seal bead 16ᵃ. The central sealing element 16ᶜ will always make contact with the valve disc 20 in the closed position, which will provide sealing against the disc in the event of a fire, or at all temperatures from cryogenic to fire condition. Also, when the Teflon coating provided for the beads 16ᵃ and 16ᵇ is destroyed, the sealing bead 16ᶜ will still engage the disc 12 in a sealing relationship. The sealing bead 16ᶜ is maintained in contact with the disc 12 by means of the springs 18 and 19. The variable sealing load provided by the springs 18 and 19 compensates for the change in resiliency of the bonded plastic material due to temperature changes thereby maintaining leakproof valve performance even at cryogenic temperatures. In certain valve applications, however, the springs 18 and 19 may not be necessary.

The seal means 15 further comprehends a mechanical responsive loading means 20 arranged with the retaining element 17 and the sealing element 16. The mechanically responsive loading means 20 is illustrated as a conventional Belleville spring constructed of aluminum bronze and arranged adjacent the retainer 17. The end of the Belleville spring 20, opposite from the retainer 17, engages a loading ring 21 that is secured by means of conventional fasteners 22, as illustrated in Fig. 2 and are carried by the loading ring 23 and secured by a retaining ring 24. The fasteners 22 have their threaded ends securing the loading ring 21. The important feature of the loading means 20 or Belleville spring is that it provides essentially constant sealing load compensating for the non-uniform expansions and contractions of the adjacent parts during periods of rapid temperature change, such as would occur when a warm valve (i.e. ambient) is suddenly filled with cryogenic fluid. The disclosed combination of static and dynamic sealing means then provide the virtually leakproof seal in both directions of fluid flow without danger of the seal blowing out downstream. The sealing element 16 is also provided with a static sealing portion illustrated in Fig. 3 as the sealing element 16S secured between the retainer 17 and the valve body 11.

In addition to the compensation for the expansion and contraction of the sealing materials comprising the sealing element 16, it is also known that in certain applications that the fluid being processed by the valve 10 may contain sand, dirt, and similar particles. The constructions of the sealing element 16 with the Teflon coated sealing beads 16ᵃ and 16ᵇ are arranged so that they act as wipers to prevent any sand, dirt and particles from being crushed between the valve disc 12 and the bare metal center bead 16ᶜ of the sealing element 16 during the final degrees of valve closing. It is known that the resilient sealing materials function to "sponge up" sand particles, and the like, and are not damaged as are metallic seals. This wiping action will reduce the risk of scratching and damage to the center lobe 16ᶜ. Accordingly, the center lobe 16ᶜ will make contact with the valve disc in the closed position in both directions of fluid flow, while the lobes 16ᵃ and 16ᵇ will function as forward and reverse seals to provide positive leaktight sealing for the valve 10.

A further advantage of the sealing element 16 is that it is retrofittable to all of the present day bidirectional valves constructed in accordance with U.S. Patent No. 3,650,508. Accordingly, the only additional parts necessary to replace the present day sealing elements would be to provide different size seal springs without any need of machine operations on the valve 10 or to make any further modifications.

In summary, the preferred valve described above is an improved cryogenic and special fluid handling valve having improved sealing means that is capable of use at all temperatures from cryogenic to external fire temperatures, and that is used in environments where sand, dirt, etc., may be present in the fluids being controlled by the valve. The use of a metallic substrate coated with a resilient plastic material as the sealing element provides the advantages of both types of sealing material in a simple sealing element. The valve is particularly adapted for cryogenic valves in which large temperature excursions are experienced, and affords an essentially leakproof seal for bi-directional fluid flow without deleterious effects.

**Claims**

1. A valve (10) comprising a body member (11) provided with a passageway for fluids, a valve disc (12) rotatably mounted in the passageway for controlling the flow of fluids therethrough; bidirectional sealing means (15) mounted in the passageway of the body member (11) for coaction with the valve disc (12) to seal off the flow of fluid through the body member (11) in both fluid flow directions through the passageway; the sealing means (15) being operable over a range of temperatures extending down to cryogenic temperatures and being constructed and defined for bidirectional sealing engagement with the edge of the valve disc, the sealing portion of the sealing means including a thermally sensitive, resilient material for engaging the valve disc (12) in a leakproof fashion; and mechanically responsive spring means (20) mounted adjacent the sealing means (15) and providing a sealing load to compensate for non-uniform expansion and contraction of adjacent parts of the valve during temperature changes to provide a substantially constant sealing load, characterised in that the sealing means (15) comprises a metallic core (16) with a layer (16Ta, 16Tb) of thermally sensitive material bonded over the bidirectional sealing surfaces of the sealing means for sealing against the valve disc (12), and has a metallic portion (16c) for engaging the valve disc (12) to provide a fire safe seal for the valve, the sealing means (15) being operable at temperatures up to extremes of fire temperatures.

2. A valve according to claim 1, characterised in that it is constructed and defined to have a first beadlike projection (16a) for sealing engagement with the edge of the valve disc (12), the first beadlike projection having a thin layer (16Ta) of the thermally sensitive, resilient material bonded thereover for engaging the valve disc (12) in a leakproof fashion, and in that the metallic portion of the sealing means comprises another beadlike projection (16c) adjacent the first beadlike projection (16a), the said another beadlike projection (16c) being constructed without a layer of the thermally sensitive material.

3. A valve according to claim 1, characterised in that the sealing means (15) is constructed and defined to have a pair of spaced beadlike projections (16a, 16b) for sealing engagement with the edge of the valve disc (12) which have a thin layer of a thermally sensitive, resilient material bonded thereover for engaging the valve disc (12) in a leakproof fashion, and a third beadlike projection (16c) intermediate the pair of spaced projections (16a, 16b) and spaced therefrom, the third beadlike projection (16c) being completely metallic and engaging the valve disc (12) when it is moved to a closed position to form the said fire safe seal.

4. A valve according to claim 2 or claim 3, characterised by spring means (18 or 19) for mechanically loading the sealing means (15) to effect a seal at at least one of the beadlike projections.

5. A valve according to any preceding claim, characterised in that the valve disc has a spherical sealing surface (12a) defined for sealing coaction with the sealing means (15).

6. A valve according to claim 5, characterised in that the valve disc (12) is a butterfly valve arranged slightly offset from the sealing means (15).

7. A valve according to claim 3 characterised in that the said pair of spaced beadlike projections (16a, 16b) further function as wipers to prevent solid particles in the fluid from being crushed between the valve disc (12) and the third beadlike projection (16c) during the final closing of the valve disc (12) to the sealing means (15).

8. A valve according to claim 7, characterised in that the said pair of spaced beadlike projections (16a, 16b) extend outwardly of the third beadlike projection (16c) when the sealing means (15) is in a non-sealing position.

9. A valve according to any preceding claim, characterised in that the layer (16Ta, 16Tb) of thermally sensitive resilient material is a thin layer constructed of a pre-selected Teflon material.

10. A valve according to any preceding claim, characterised in that the said mechanically responsive spring means (20) comprises a Belleville spring.

11. A valve according to claim 10, characterised by retaining means (21, 22, 23, 24) for the said spring means (20).

12. A valve according to any preceding claim, characterised in that the sealing means (15) is further constructed and defined to constrain the sealing means (15) from blowing out downstream in both directions of fluid flow.

13. A valve according to claim 12, characterised in that the sealing means (15) has a geometrical configuration for defining unbalanced pressures on the sealing means (15) to render the sealing means (15) pressure sensitive in both directions of fluid flow.

14. A valve according to claim 3, characterised by spring means (18, 19) for mechanically and variably loading the sealing means (15) at at least one of the beadlike projections to compensate for the change in resiliency of the said resilient material due to temperature changes to thereby maintain leakproof valve performance even at cryogenic temperatures.

15. A valve according to claim 14, characterised in that the spring means comprises individual spring means (18, 19) for mechanically loading each of the beadlike projections.

16. A valve according to claim 3, characterised in that the metallic core (16) has a U-shaped configuration in cross-section with an outwardly extending arm (16p); retaining means (17) constructed and defined to conform to the configuration of the core (16) and extend into the U-shaped configuration for limiting the radial displacement of the core (16) and means (16s) for sealing the outwardly extending arm (16p) to the valve body member (11).

## Patentansprüche

1. Ventil (10), das einen Hauptteil (11) aufweist, der mit einem Durchgang für Fluide versehen ist, ferner einen Ventilteller (12), der im Durchgang drehbar angebracht ist, um den durchgehenden Fluidstrom zu regeln, eine bidirektionale Dichtungseinrichtung (15), die im Durchgang des Hauptteils (11) zum Zusammenwirken mit dem Ventilteller (12) angebracht ist, um den Fluidstrom durch den Hauptteil (11) in beiden Fluidströmungsrichtungen durch den Durchgang abzusperren, wobei die Dichtungseinrichtung (15) in einem Temperaturbereich arbeitet, der sich bis zu kryogenischen Temperaturen nach unten erstreckt, und die derart beschaffen und ausgelegt ist, daß sie bidirektional einen Dichtungseingriff mit dem Rand des Ventiltellers bildet, wobei der Dichtungsabschnitt der Dichtungseinrichtung ein wärmeempfindliches, federnd nachgiebiges Material enthält, das mit dem Ventilteller (12) auf dichte Weise zusammenarbeitet, und das eine mechanisch ansprechende Federeinrichtung (20) aufweist, die in der Nähe der Dichtungseinrichtung (15) angebracht ist und eine Dichtungsbelastung aufbringt, um eine ungleichförmige Expansion und Kontraktion der benachbarten Teile des Ventils während den Temperaturänderungen zu kompensieren, und eine im wesentlichen konstante Dichtungsbelastung aufzubringen, dadurch gekennzeichnet, daß die Dichtungseinrichtung (15) einen metallischen Kern (16) mit einer Schicht (16Ta, 16Tb) aus wärmeempfindlichem Material, das auf den bidirektionalen Dichtungsflächen der Dichtungseinrichtung haftend aufgebracht ist, zur Abdichtung gegen den Ventilteller (12) aufweist, und einen metallischen Abschnitt (16c) zum Zusammenarbeiten mit dem Ventilteller (12) aufweist, um eine feuersichere Dichtung für das Ventil zu erhalten, wobei die Dichtungseinrichtung (15) bei Temperaturen bis zu den höchsten Feuertemperaturen betriebbar ist.

2. Ventil nach Anspruch 1, dadurch gekennzeichnet, daß es derart beschaffen und ausgelegt ist, daß es einen ersten sickenähnlichen Vorsprung (16a) zum Dichtungseingriff mit dem Rand des Ventiltellers (12) hat, daß der erste sickenähnliche Vorsprung eine dünne Schicht (16Ta) aus wärmeempfindlichem, federnd nachgiebigem Material, das haftend aufgebracht ist, zum Zusammenarbeiten mit dem Ventilteller (12) auf eine dichte Weise hat, und daß der metallische Abschnitt der Dichtungseinrichtung einen weiteren sickenähnlichen Vorsprung (16c) in der Nähe des ersten sickenähnlichen Vorsprunges (16a) aufweist, wobei der weitere sickenähnliche Vorsprung (16c) nicht mit einer Schicht aus wärmeempfindlichem Material versehen ist.

3. Ventil nach Anspruch 1, dadurch gekennzeichnet, daß die Dichtungseinrichtung (15) derart beschaffen und ausgelegt ist, daß sie ein Paar beabstandeter, sickenähnlicher Vorsprünge (16a, 16b) zum Dichtungseingriff mit dem Rand des Ventiltellers (12) hat, die eine dünne Schicht aus einem wärmeempfindlichen, federnd nachgiebigen Material, das haftend aufgebracht ist, zum Zusammenarbeiten mit dem Ventilteller (12) auf eine dichte Weise haben und daß ein dritter, sickenähnlicher Vorsprung (16c) zwischen den beiden beabstandeten Vorsprüngen (16a, 16b) in einem Abstand hiervon angeordnet ist, wobei der dritte, sickenähnliche Vorsprung (16c) vollständig aus Metall besteht und in Eingriff mit dem Ventilteller (12) kommt, wenn er in eine Schließstellung unter Bildung der feuersicheren Dichtung bewegt wird.

4. Ventil nach Anspruch 2 oder Anspruch 3, dadurch gekennzeichnet, daß die Federeinrichtung (18 oder 19) für die mechanische Belastung der Dichtungseinrichtung (15) zum Bewirken einer Dichtung an wenigstens einem der sickenähnlichen Vorsprünge vorgesehen ist.

5. Ventil nach einem der vorangehenden Ansprüche, dadurch gekennzeichnet, daß der Ventilteller eine sphärische Dichtungsfläche (12a) hat, die zum Dichtungszusammenarbeiten mit der Dichtungseinrichtung (15) bestimmt ist.

6. Ventil nach Anspruch 5, dadurch gekennzeichnet, daß der Ventilteller (12) ein Klappenventil ist, das geringfügig versetzt zu der Dichtungseinrichtung (15) angeordnet ist.

7. Ventil nach Anspruch 3, dadurch gekennzeichnet, daß die beiden beabstandeten, sickenähnlichen Vorsprünge (16a, 16b) ferner als Abstreifer dienen, um zu verhindern, daß Feststoffpartikel im Fluid zwischen dem Ventilteller (12) und dem dritten, sickenähnlichen Vorsprung (16c) beim abschließenden Schließen des Ventiltellers (12) im Zusammenwirken mit der Dichtungseinrichtung (15) verkleinert werden.

8. Ventil nach Anspruch 7, dadurch gekennzeichnet, daß die beiden beabstandeten, sickenähnlichen Vorsprünge (16a, 16b) sich von dem dritten, sickenähnlichen Vorsprung (16c) nach außen erstrecken, wenn die Dichtungseinrichtung (15) sich in ihrer nicht-dichtenden Stellung befindet.

9. Ventil nach einem der vorangehenden Ansprüche, dadurch gekennzeichnet, daß die Schicht (16Ta, 16Tb) des wärmeempfindlichen, federnd nachgiebigen Materials eine dünne Schicht ist, die aus einem vorwählbaren Teflon-Material hergestellt ist.

10. Ventil nach einem der vorangehenden Ansprüche, dadurch gekennzeichnet, daß die mechanisch ansprechende Federeinrichtung (20) eine Tellerfeder aufweist.

11. Ventil nach Anspruch 10, gekennzeichnet durch eine Halteeinrichtung (21, 22, 23, 24) für die Federeinrichtung (20).

12. Ventil nach einem der vorangehenden Ansprüche, dadurch gekennzeichnet, daß die Dichtungseinrichtung (15) ferner derart beschaffen und ausgelegt ist, daß die Dichtungseinrichtung (15) gezwungen ist, stromabwärts in beiden Fluidströmungsrichtungen auszublasen.

13. Ventil nach Anspruch 12, dadurch gekennzeichnet, daß die Dichtungseinrichtung (15) eine geometrische Form zur Definition von ungleichen Drücken auf der Dichtungseinrichtung (15) hat, um die Dichtungseinrichtung (15) druckempfindlich in beiden Fluidströmungsrichtungen zu machen.

14. Ventil nach Anspruch 3, gekennzeichnet durch Federeinrichtungen (18, 19) zum mechanischen und variablen Belasten der Dichtungseinrichtung (15) an wenigstens einem der sickenähnlichen Vorsprünge zur Kompensation der Änderung des Federungsvermögens des federnd nachgiebigen Materials infolge von Temperaturänderungen, um hierdurch das Dichtungsverhalten des Ventils selbst bei kryogenischen Temperaturen aufrechtzuerhalten.

15. Ventil nach Anspruch 14, dadurch gekennzeichnet, daß die Federeinrichtùngen einzelne Federeinrichtungen (18, 19) zur mechanischen Vorbelastung jedes sickenähnlichen Vorsprungs aufweist.

16. Ventil nach Anspruch 3, dadurch gekennzeichnet, daß der metallische Kern (16) eine U-förmige Gestalt im Querschnitt mit einem nach außen weisenden Arm (16p) hat, daß die Halteeinrichtung (17) derart beschaffen und ausgelegt ist, daß es sich an die Form des Kerns (16) anpaßt und in die U-förmige Gestalt sich hineinerstreckt, um die radiale Verschiebung des Kerns (16) zu begrenzen, und daß Einrichtungen (16s) vorgesehen sind, um den nach außen verlaufenden Arm (16p) in Bezug zum Ventilhauptteil (11) abzudichten.

## Revendications

1. Vanne (10) comprenant: un corps (11) muni d'une voie de passage pour des fluides; un disque de vanne (12) monté rotatif dans la voie de passage pour contrôler l'écoulement de fluides à travers cette dernière; un moyen d'étanchéité bidirectionnel (15) monté dans la voie de passage du corps (11) pour coopérer avec le disque de vanne (12) afin d'interrompre l'écoulement de fluide à travers le corps (11) dans les deux sens d'écoulement du fluide à travers la voie de passage, le moyen d'étanchéité (15) étant opérationnel sur une plage de températures descendant jusqu'aux températures cyrogéniques et étant conçu et configuré pour un engagement étanche bi-directionnel avec le bord de la vanne, et la partie d'étanchéité du moyen d'étanchéité présentant un matériau résilient thermosensible afin de s'engager avec le disque de vanne (12) d'une manière étanche aux fuites; et un moyen de ressort (20) à réaction mécanique monté au voisinage du moyen d'étanchéité (15) et fournissant une contrainte d'étanchéité pour compenser la dilatation et la contraction non uniformes des parties voisines de la vanne lors de modifications de température, afin de fournir une contrainte d'étanchéité sensiblement constante;

caractérisée en ce que le moyen d'étanchéité (15) comprend une partie centrale métallique (16) avec une couche (16Ta, 16Tb) de matériau thermosensible liée sur les surfaces d'étanchéité bi-directionnelle du moyen d'étanchéité afin d'assurer l'étanchéité contre le disque de vanne (12), et possède une partie métallique (16c) pour un engagement avec le disque de vanne (12) afin de fournir un joint d'étanchéité ignifuge pour la vanne, le moyen d'étanchéité (15) étant opérationnel à des températures allant jusqu'à des températures extrêmes d'inflammation.

2. Vanne selon la revendication 1, caractérisée en ce qu'elle est conçue et configurée de manière à présenter une première saillie du genre bourrelet (16a) pour s'engager en étanchéité avec le bord du disque de vanne (12), la première saillie du genre bourrelet étant munie d'une mince couche (16Ta) de matériau résilient thermosensible liée à ladite saillie afin de s'engager avec le disque de vanne (12) d'une manière étanche aux fuites, et en ce que la partie métallique du moyen d'étanchéité comprend une autre saillie du genre bourrelet (16c) au voisinage de la première saillie du genre bourrelet (16a), ladite autre saillie du genre bourrelet (16c) étant dépourvue de couche de matériau thermosensible.

3. Vanne selon la revendication 1, caractérisée en ce que le moyen d'étanchéité (15) est conçu et configuré de manière à présenter une paire de saillies espacées du genre bourrelet (16a, 16b) pour s'engager en étanchéité avec le bord du disque de vanne (12), qui sont munis d'une mince couche de matériau résilient thermosensible liée sur lesdites saillies afin d'être en engagement étanche aux fuites avec le disque de vanne (12), et une troisième saillie du genre bourrelet (16c) intermédiaire entre la paire de saillies espacées (16a, 16b) et espacée de ces derniers, la troisième saillie du genre bourrelet (16c) étant entièrement métallique et s'engageant avec le disque de vanne (12) lorsqu'elle est déplacée en position fermée, afin de former ledit joint d'étanchéité ignifuge.

4. Vanne selon la revendication 2 ou 3, caractérisée par un moyen élastique (18 ou 19) pour contraindre mécaniquement le moyen d'étanchéité (15) afin de réaliser un joint d'étanchéité au niveau d'au moins une des saillies du genre bourrelet.

5. Vanne selon une quelconque des revendications précédentes, caractérisée en ce que le disque de vanne présente une surface d'étanchéité sphérique (12a) définie pour coopérer en étanchéité avec le moyen d'étanchéité (15).

6. Vanne selon la revendication 5, caractérisée en ce que le disque de vanne (12) est un disque de vanne papillon disposé légèrement décalé par rapport au moyen d'étanchéité (15).

7. Vanne selon la revendication 3, caractérisée en ce que ladite paire de saillies espacée du genre bourrelets (16a, 16b) joue en outre le rôle de joint racleur pour empêcher les particules solides présentes dans le fluide d'être broyées entre le disque de vanne (12) et la troisième saillie du genre bourrelet (16c) lors de la fermeture finale du disque de vanne (12) sur le moyen d'étanchéité (15).

8. Vanne selon la revendication 7, caractérisée en ce que ladite paire de saillies espacées du genre bourrelets (16a, 16b) s'étend à l'extérieur de la troisième saillie du genre bourrelet (16c) lorsque le moyen d'étanchéité (15) n'est pas en position d'étanchéité.

9. Vanne selon une quelconque des revendications précédentes, caractérisé en ce que la couche (16Ta, 16Tb) de matériau résilient thermosensible est une couche mince constituée d'un matériau présélectionné à base de Téflon.

10. Vanne selon une quelconque des revendications précédentes, caractérisée en ce que ledit moyen élastique (20) à réaction mécanique comprend un ressort Belleville.

11. Vanne selon la revendication 10, caractérisée par des moyens de retenue (21, 22, 23, 24) pour ledit moyen élastique (20).

12. Vanne selon une quelconque des revendications précédentes, caractérisée en ce que le moyen d'étanchéité (15) est en outre conçu et configuré de manière à empêcher le moyen d'étanchéité (15) d'être expulsé vers l'aval dans les deux sens d'écoulement du fluide.

13. Vanne selon la revendication 12, caractérisée en ce que le moyen d'étanchéité (15) présente une configuration géométrique permettant de définir des pressions non équilibrées sur le moyen d'étanchéité (15) afin de rendre le moyen d'étanchéité (15) sensible à la pression dans les deux sens d'écoulement du fluide.

14. Vanne selon la revendication 3, caractérisée par un moyen élastique (18, 19) pour contraindre mécaniquement et de manière variable le moyen d'étanchéité (15) au niveau d'au moins une des saillies du genre bourrelet afin de compenser la modification de la résilience dudit matériau résilient due à des modifications de température, permettant ainsi de maintenir l'efficacité de l'étanchéité aux fuites de la vanne même à des températures cryogéniques.

15. Vanne selon la revendication 14, caractérisée en ce que le moyen élastique comprend des moyens de ressort individuels (18, 19) pour contraindre mécaniquement chacune des saillies du genre bourrelet.

16. Vanne selon la revendication 3, caractérisée en ce que la partie centrale métallique (16) présente en coupe transversale une configuration en forme du U avec un bras (16p) s'étendant vers l'extérieur; un moyen de retenue (17) conçu et configuré de manière à se conformer à la configuration de la partie centrale (16) et à s'étendre dans la configuration en forme d U pour limiter le déplacement radial de la partie centrale (16); et un moyen (16s) pour assurer l'étanchéité du bras (16p), s'étendant vers l'extérieur, avec le corps de vanne (11).

Fig. 1.

Fig. 4.

Fig. 3.

*Fig. 2.*

REVERSE FLOW
DIRECTION

NORMAL FLOW
DIRECTION